# EUROPEAN PATENT APPLICATION

(11) **EP 1 705 080 A2**
(43) Date of publication of application: **27.09.2006**
(21) Application number: 06075673.1
(22) Date of filing: 23.03.2006
(51) Int. Cl.: B60R 22/32

(54) **Unit to unbolt a safety belt in a state of emergency**

(30) Priority: 23.03.2005 NL 1028610
(71) Applicant: De Vries, Andries, 1333 PH Almere (NL)
(72) Inventor: Koning, Wiebe, 7946 LM Wanneperveen (NL)

(57) **Abstract**

The present invention relates to a device for quick, safe and easy uncoupling a safety belt of a vehicle in a state of emergency.

The effect of the invention is based on the usage of an extra uncoupling mechanism, mounted between a standard safety belt release device and the chassis or other logic mounting part of the vehicle. This so called emergency release mechanism has been provided with a seal, which after breaking the seal, in case of an emergency, will start a slackening release of the safety belt.
The above mentioned uncoupling has a predefined releasing distance, which will have the effect that occupants can free themselves from critical positions and at the end of this releasing distance there will be a perceptible acceleration in the movement as a signal for definite uncoupling. The distance and the time of this uncoupling moment will be variable and predetermined by the producer. The purpose of the so called perceptible acceleration will have its effect on the occupants by tighten there grip on the safety belt, preventing them from spontaneously falling down or side wards and becoming injured with possible unconsciousness.

## Description

The present invention relates to a device for quick, safe and easy uncoupling a safety belt of a vehicle in a state of emergency.

Ordinary safety belts are commonly known and for instance placed, by regulation, in cars and busses.

A disadvantage of these ordinary safety belts is the fact that, after a crash, where the vehicle comes at is side or roof, the occupant(s), more likely, ends up hanging in these so called safety belts. The force created, on the release part of the fastening side of the safety belt, is so enormous that in many cases it is impossible to unbolt the safety belt, which of course is not the meaning of a safety belt, especially in case of fire or drowning after the crash.

A second disadvantage of these safety belts is the fact that, after for instance a proper unbolting by the occupants or after cutting their self loose, the chance of getting a serious head injury by falling down can not be ruled out, with a possible unconsciousness as a result. The possible fall in a truck for instance, can be down to two meters, in case of head down and body up the above mentioned unconsciousness is even more likely to happen.
It is obvious that these cases are not desirable, especially in cases of emergency.

All safety belts are capable of protecting the occupants during the crash, but none of the safety belts provides a quick and safe unbolting after the crash in different circumstances.

According to this invention there is provided a device for uncoupling a safety belt in a vehicle after a crash of a vehicle of any kind, remarking the fact that the importance of the invention will increase by the relation between the size of the fall of the occupants and the size of the vehicle.

The solution and all other characteristics of this invention are mentioned and described in the content of the patent claims below and its advantages are more clear from the following description, with reference to the accompanying drawings, which illustrate preferred embodiments of the invention, without restricting the scope of the inventive concept.

The effect of the invention is based on the usage of an extra uncoupling mechanism, mounted between a standard safety belt release device and the chassis or other logic mounting part of the vehicle. This so called emergency release mechanism has been provided with a seal, which after breaking the seal, in case of an emergency, will start a slackening release of the safety belt.
The above mentioned uncoupling has a predefined releasing distance, which will have the effect that occupants can free themselves from critical positions and at the end of this releasing distance there will be a perceptible acceleration in the movement as a signal for definite uncoupling. The distance and the time of this uncoupling moment will be variable and predetermined by the producer. The purpose of the so called perceptible acceleration will have its effect on the occupants by tighten there grip on the safety belt, preventing them from spontaneously falling down or side wards and becoming injured with possible unconsciousness.
An embodiment of the invention is hereafter described and shown in the drawings.
The drawings show:
- Figure 1: a cross-section of the emergency uncoupling device in a sealed state
- Figure 2: a cross-section of the emergency uncoupling device with a broken seal in the first stage
- Figure 3: a cross-section of the emergency uncoupling device with a broken seal in the second stage
- Figure 4: a cross-section of the emergency uncoupling device with a broken seal in the last and uncoupled stage

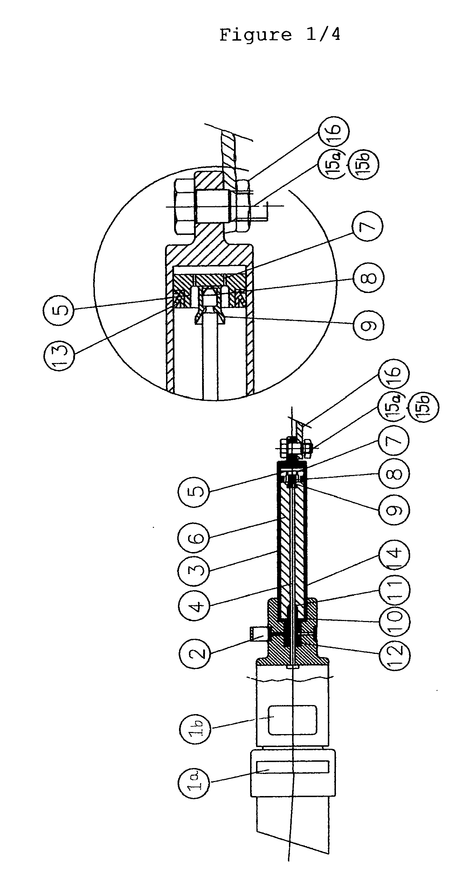

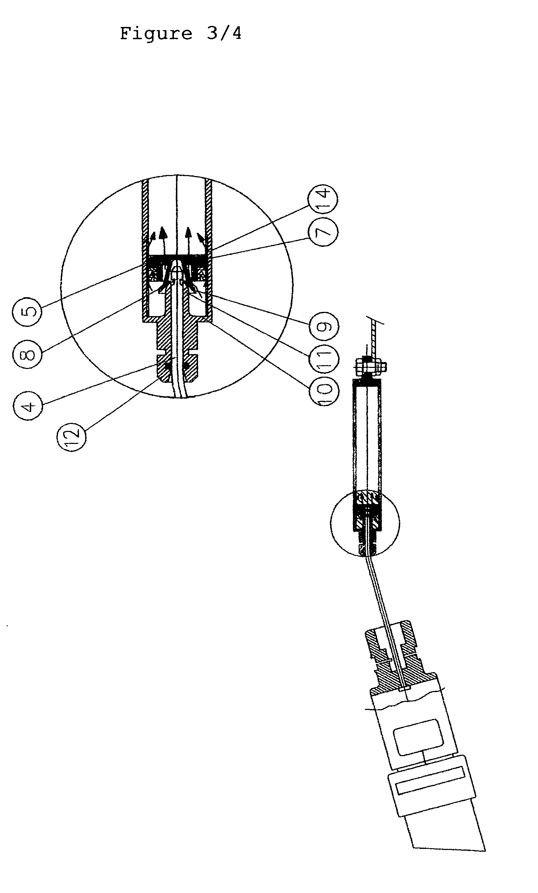

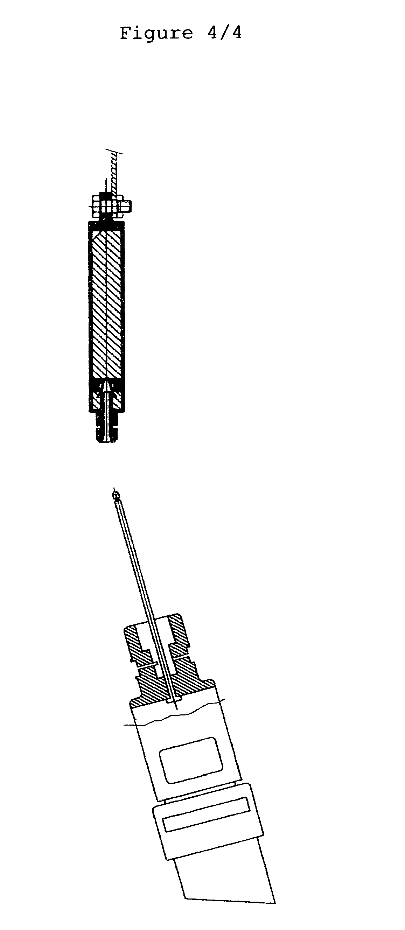

Figure 1 shows the securing mechanism of a standard safety belt, side A (1a) and (1b) and the emergency uncoupling device as claimed, side B, existing of the following items:
the seal (2), the securing mechanism (1b) with a flexible piston-rod fixed to the bottom part of the securing mechanism, provided with a take-away hook construction (8) at the end of the piston-rod (4). This take-away hook construction (8) fits into a claw-coupling (9) fixed to a piston (5), provided with calibrated holes (7) and a mounted sealing ring (13), surrounded by a predetermined viscous liquid (6) in a cylinder housing (3). The uncoupling-cone (11) and the sealing ring (12), for sealing the flexible piston-rod (4), are constructed at the end part of the cylinder housing (3) connected to side A. Grooves (14) are made along the inside of the last part of the cylinder housing (3). The cylinder housing (3) secured to the chassis of a vehicle (16) by means of a fastening bolt (15a) and a nut (15b).

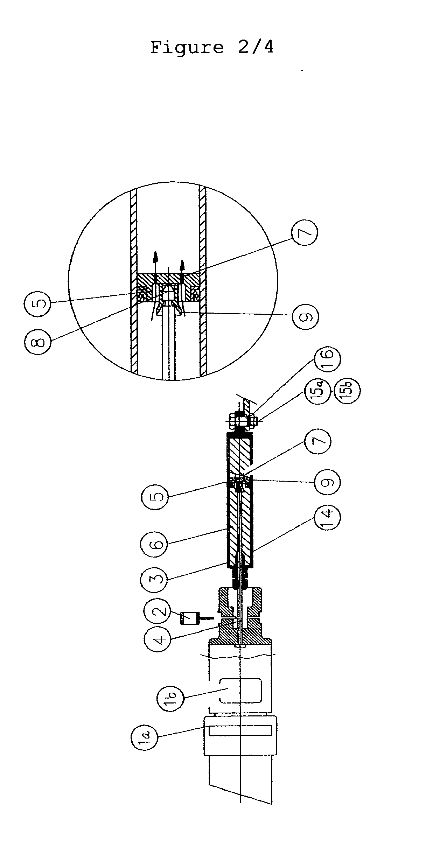

Figures 2,3 and 4 show the working as follows:
Under normal circumstances, only the standard safety belt mechanisms (1a) and (1b) will be used. The forces of the safety belt will be transferred through the safety belt mechanisms (1a) and (1b), the parts (2) and (3) of the uncoupling device, the fastening bolt (15a)and nut (15b) to the chassis of a vehicle (16). In case of an emergency, where the vehicle rolls over to its side or top, an enormous force will be present at the standard safety belt mechanisms (1a) and (1b) and as a result the securing mechanism (1b) will not open properly. After breaking the seal (2), Figure 2, the force of the belt will not be transferred to the chassis (16) any longer, but will be transferred to the flexible piston-rod (4) instead. Influenced by the force of the belt the piston (5) moves to the left in the picture, during stage 1, and the compressed viscous liquid (6) slides, through the calibrated holes (7), detail drawing Figure 2, into the compartment behind the piston (5). During the second stage, Figure 3, the viscous liquid (6) will slide even faster behind the piston (5), by means of the grooves (14)along the inside of the last part of the cylinder housing (3),which, as a result, will accelerate the speed of the movement. This is the perceptive part of the movement and it will indicate the opening of the device, which will result in a natural tight grip on the belt to prevent falling down or side wards.
The piston (5) is by means of a claw-coupling (9) hooked to a take-away hook construction (8). By coming to the end of the cylinder housing (3), the claws of the claw-coupling (9) will be forced open by the uncoupling-cone (11), detail drawing Figure 3. The attachment between the flexible piston-rod (4) and the piston (5) will be permanent separated. This will final the whole process of uncoupling in a state of emergency, Figure 4.

## Claims

1. a Device for quick, safe and easy uncoupling a safety belt of a vehicle in a state of emergency, **characterised in that** the securing mechanism of the safety belt exposed to extreme forces of the belt, is still being able to uncouple and wherein it can fully integrate into the existing safety belt constructions as known in the market.

2. a Device according to claim 1., **characterised in that** the seal (2) can be broken once.

3. a Device according to any one of the preceding claims, **characterised in that** the calibration of the holes (7) can be variable.

4. a Device according to any one of the preceding claims, **characterised in that** the time of uncoupling process can be variable.

5. a Device according to any one of the preceding claims, **characterised in that** the piston-rod (4) is variable in flexibility in every direction.

6. a Device according to any one of the preceding claims, wherein grooves (14) along the inside of the last part of the cylinder housing (3) are creating a acceleration of the movement at the end stage, with the purpose of creating a perceptive part of the movement resulting in a tight grip on the safety belt, during the permanent separation of the device.

7. a Device according to any one of the preceding claims, **characterised in that** it can be uncoupled in every thinkable direction, mounted in a vehicle of any kind.
